# EUROPÄISCHE PATENTSCHRIFT

(11) **EP 1 343 693 B1**
(45) Veröffentlichungstag und Bekanntmachung des Hinweises auf die Patenterteilung: **09.11.2005**
(21) Anmeldenummer: 01985391.0
(22) Anmeldetag: 11.12.2001
(51) Int. Cl.: B65B 3/02

(54) **VERFAHREN UND VORRICHTUNG ZUM HERSTELLEN UND BEFÜLLEN VON BEHÄLTERN**
METHOD AND DEVICE FOR THE PRODUCTION AND FILLING OF CONTAINERS
PROCEDE ET DISPOSITIF DE FABRICATION ET DE REMPLISSAGE DE RECIPIENTS

(30) Priorität: 19.12.2000 DE 10063282
(43) Veröffentlichungstag der Anmeldung: 17.09.2003
(73) Patentinhaber: Hansen, Bernd, 74429 Sulzbach-Laufen (DE)
(72) Erfinder: HANSEN, Bernd, 74429 Sulzbach-Laufen (DE); WEISS, Hans, 74429 Sulzbach-Laufen (DE)
(74) Vertreter: Bartels, Martin Erich Arthur
(86) Internationale Anmeldenummer: PCT/EP2001/014534
(87) Internationale Veröffentlichungsnummer: WO 2002/049821

(56) Entgegenhaltungen:
- EP-A- 0 924 047
- DE-A- 2 818 349
- US-A- 3 691 267
- US-A- 5 261 545
- US-A- 5 759 218
- US-A- 5 962 039
- PATENT ABSTRACTS OF JAPAN vol. 009, no. 183 (M-400), 30. Juli 1985 (1985-07-30) & JP 60 049919 A (AIDA ENGINEERING KK), 19. März 1985 (1985-03-19)
- PATENT ABSTRACTS OF JAPAN vol. 016, no. 428 (M-1307), 8. September 1992 (1992-09-08) & JP 04 147824 A (DAINIPPON PRINTING CO LTD), 21. Mai 1992 (1992-05-21)

## Beschreibung

Die Erfindung bezieht sich auf ein Verfahren zum Herstellen und Befüllen von Behältern, mit den Merkmalen des Oberbegriffes des Patentanspruches 1. Außerdem bezieht sich die Erfindung auf eine Vorrichtung für die Durchführung eines derartigen Verfahrens mit den Merkmalen des Oberbegriffes des Patentanspruches 9.

Ein Verfahren dieser Art nebst Vorrichtung sind in der US-A-5,961,039 sowie in der JP-A-60049919 beschrieben. Diese bekannten Verfahren ermöglichen ein automatisiertes Formen (Blasen oder Vakuumformen), Füllen und Verschließen von Behältnissen auf wirtschaftliche Weise. Wenn hochsensible Erzeugnisse hergestellt werden sollen, beispielsweise Pharmazeutika, bei denen die internationalen Standards für die aseptische Verpackung zu erfüllen sind, dann befindet sich die Form, wenn sie in die Füllposition verbracht ist, unter einem sogenannten Abfüllsterilraum (ASR), in welchem sterile Luft über die offene Füllöffnung der Behälter strömt und einen wirksamen Schutz gegen das Eindringen von Keimen bildet, bis nach Beendigen des Füllvorganges bewegliche Kopfbacken der Form geschlossen werden, um durch einen kombinierten Vakuum-Schweißvorgang den gewünschten Kopfverschluß des Behälters auszubilden.

Während bei den dahingehend bekannten Verfahren und Vorrichtungen die füllöffnung durch den Abfüllsterilraum in der füllposition wirksam geschützt ist, ist die offene Füllöffnung während des Wechsels von der Extrusionsposition, in der der gebildete Schlauch unter der Extruderdüse durchtrennt wird und die Füllöffnung gebildet wird, bis zum Erreichen der Füllposition nicht vollständig geschützt, selbst wenn das Verfahren in einem Reinraum durchgeführt wird. Mit anderen Worten gesagt, bildet der die Füllöffnung aufweisende Schlauch während der Übergabe in die Füllposition ein an der Oberseite offenes Behältnis aus.

Zwar ist in der JP-A-4147824 bereits vorgeschlagen worden die Füllöffnung des Schlauches während der Bewegung der Form in die Füllposition durch einen beheizbaren Zylinder abzudecken und durch die US-A-5,261,545 ist es bekannt, zur Reduzierung der Keimzahl eine mit Infrarot beheizbare Platte über der Füllöffnung anzubringen; allein auch hier kommt es beim Wechsel der einzelnen Herstellpositionen, zumindest kurzzeitig zu einer offenen Füllöffnung mit der Gefahr, daß Keime oder andere Partikel das Behälterinnere kontaminieren können.

Ausgehend von diesem Stand der Technik liegt der Erfindung die Aufgabe zugrunde, ein Verfahren sowie eine Vorrichtung anzugeben, das demgegenüber einen noch besseren Schutz der offenen Füllöffnung gewährleistet. Bei einem Verfahren der eingangs genannten Art ist diese Aufgabe erfindungsgemäß mit den Merkmalen des kennzeichnenden Teils des Patentanspruches 1 gelöst, sowie bei einer Vorrichtung mit den Merkmalen des kennzeichnenden Teils des Patentanspruches 9.

Dadurch daß die sterile Barriere durch eine zusammen mit dem den Schlauch durchtrennenden Trennelement bewegliche, beheizbare Platte gebildet ist, die auf eine keimabtötende Temperatur erhitzt wird, ist nicht nur die Gefahr vermieden, daß nach Durchtrennen des Schlauches Fremdkörper in die offene Füllöffnung fallen könnten, bevor die Form den Abfüllsterilraum erreicht hat, sondem die sterile Barriere verhindert während dieses Verfahrensabschnittes auch den Zutritt von Keimen zur Füllöffnung. Das erfindungsgemäße Verfahren, sowie die erfindungsgemäße Vorrichtung eignen sich daher in besonderem Maße für die-Herstellung hochsensibler Erzeugnisse für den medizinisch/pharmazeutischen Anwendungsbereich.

Die sterile Barriere ist durch eine zusammen mit dem den Schlauch durchtrennenden Trennelement bewegliche, beheizbare Platte gebildet, die auf eine keimabtötende Temperatur, vorzugsweise von mehr als 150°C, erhitzt wird. Dadurch, daß sich die Platte zusammen mit der den Schlauch durchtrennenden Schneide bewegt, wird erreicht, daß die Füllöffnung bereits bei ihrer Bildung durch die beheizte Platte überdeckt wird, d.h., daß die Füllöffnung zu keinem Zeitpunkt ohne Abdeckung ist.

Besonders günstige Verhältnisse ergeben sich hierbei, wenn das Trennelement aus einer Schneide gebildet ist, die sich abstandsfrei an die beheizbare Platte anschließt.

Ein wirtschaftlicher Verfahrensablauf mit kurzen Taktzeiten ergibt sich, wenn die beheizbare Platte mit der an ihrem voreilenden Rand angeordneten Schneide zum Durchtrennen des Schlauches aus einer zurückgezogenen Grundposition in eine Arbeitsposition in einer Richtung bewegt wird, bei der die Platte oberhalb der in die Füllposition führenden Bewegungsbahn der Form so angeordnet wird, daß die Füllöffnung auf ihrem gesamten Weg zur Füllposition durch die Platte abgedeckt wird, und daß Platte und Schneide dann aus der Arbeitsposition wieder in die Grundposition zurückbewegt werden, nachdem die Form die Füllposition erreicht hat.

Nachstehend ist die Erfindung anhand der Zeichnung im einzelnen erläutert. Es zeigen:
- Fig. 1: eine schematisch vereinfachte Darstellung einer geöffneten Blasform und eines oberhalb befindlichen Extrusionskopfes zur Bildung eines Schlauches aus plastifiziertem Kunststoffmaterial;
- Fig. 2: die teilweise geschlossene Blasform von Fig. 1 nach Überführen in eine Füllposition und nach Ausbilden des zu befüllenden Behälters und
- Fig. 3 bis 5: stark schematisch vereinfacht und perspektivisch gezeichnete Darstellungen zur Verdeutlichung des Ablaufs des erfindungsgemäßen Verfahrens.

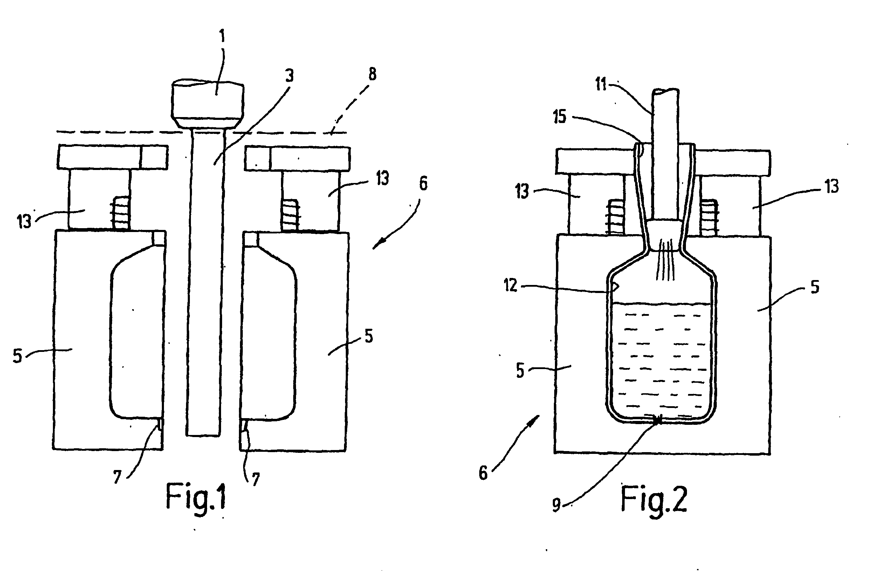

Fig. 1 und 2 zeigen Teile einer Einrichtung, wie sie im Rahmen des bekannten bottelpack®-Systems zum Herstellen von Kunststoffbehältern im Blasformverfahren benutzt wird, wobei mittels einer Extrudereinrichtung 1 ein Schlauch 3 aus aufgeschmolzenem Kunststoffmaterial zwischen die beiden Formhälften 5 einer Form 6 extrudiert wird, die in Fig. 1 in geöffnetem Zustand gezeigt ist. Nach dem Extrudieren des Schlauches 3 in die geöffnete Form 6 wird der Schlauch 3 zwischen dem Düsenaustritt der Extrudereinrichtung 1 und der Oberseite der Form 6 durchtrennt. In Fig. 1 ist die Trennlinie gestrichelt dargestellt und mit 8 bezeichnet. Fig. 2 zeigt die Form 6 in teilweise geschlossenem Zustand, wobei die für den Hauptteil des aus dem Schlauch 3 zu bildenden Behälters 12 formgebenden Teile, nämlich die Formhälften 5, so zusammengefahren sind, daß bodenseitige Schweißkanten 7 am unteren Ende des Schlauches 3 einen Schweißvorgang ausführen, um den Schlauch 3 an einer bodenseitigen Schweißnaht 9 (Fig. 2) zu verschließen.

Fig. 2 zeigt die Form 6 in einer Füllposition, in die die Form gegenüber der in Fig. 1 gezeigten, auf die Extrudereinrichtung 1 ausgerichteten Position seitwärts verschoben ist. In dieser Füllposition wird der Behälter 12, der zuvor ausgebildet wurde, indem mittels eines nicht gezeigten Blasdornes Blasluft durch die offene Füllöffnung 15 eingeblasen worden ist, über die Füllöffnung 15 mit dem Füllgut befüllt. Fig. 2 zeigt das Ende des zu diesem Zweck in die Füllöffnung 15 eingeführten Fülldörnes 11. Anstelle des Fülldornes 11 und eines zuvor eingeführten Blasdornes kann das Ausformen und Befüllen des Behälters auch mittels eines.kombinierten Blas-Fülldornes erfolgen.

In der in Fig. 2 gezeigten Füllposition befindet sich die Form unterhalb eines sogenannten Abfüllsterilraumes (ASR), der in Fig. 2 nicht dargestellt ist und als aseptische Abschirmung der Füllöffnung 15 wirkt, die durch den vorausgehenden Trennvorgang am Schlauch 3 an der in Fig. 1 angedeuteten Trennlinie 8 gebildet worden ist. Nach dem Befüllen des Behälters 12 wird der Fülldorn 11 nach oben weggefahren, und die noch geöffneten, beweglichen oberen Schweißbacken 13 der Form 6 werden zusammengefahren, um die Formgebung am Behälterhals zu bewirken und/oder diesen gleichzeitig durch Verschweißen zu verschließen. Mit den in Fig. 1 und 2 dargestellten Schweißbacken 13 wird am Behälterhals ein Außengewinde für eine Schraubkappe ausgebildet, die zusätzlich zum Verschluß durch Verschweißen vorgesehen sein kann, beispielsweise in Form einer Schraubkappe mit darin befindlichem Einstichdorn.

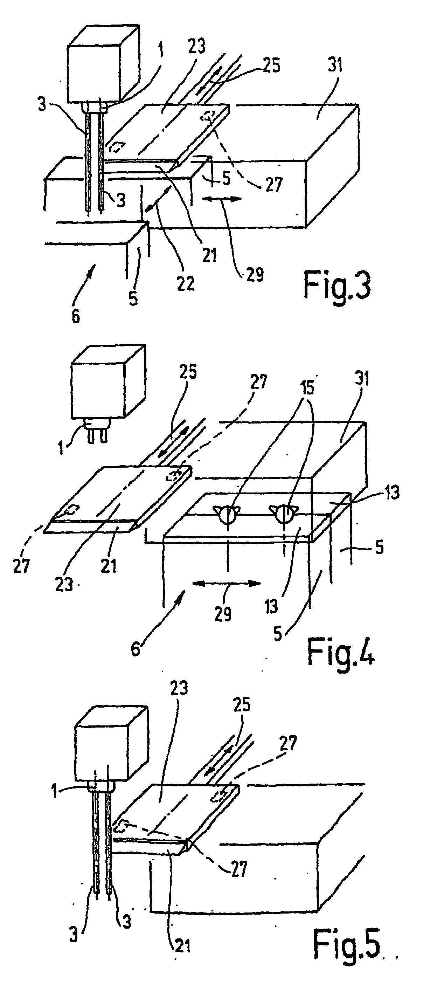

Fig. 3 bis 5 verdeutlichen in stark schematisch vereinfachter Darstellung den Ablauf des erfindungsgemäßen Verfahrens anhand eines Beispiels, bei dem für die gleichzeitige Herstellung zweier kleinvolumiger Behälter gleichzeitig zwei Schläuche 3 mittels der Extrudereinrichtung 1 in nebeneinander liegende Formhohlräume der geöffneten Form 6 hinein extrudiert werden, siehe Fig. 3, wo die Form 6 lediglich durch Umrisse der Formhälf ten 5 angedeutet ist, die zum Öffnen und Schließen der Form in den mit Doppelpfeil 22 angegebenen Richtungen beweglich sind.

Die Fig. 3 zeigt den Betriebszustand vor dem Durchtrennen der extrudierten Schläuche 3, wobei sich eine als Trennelement dienende, beheizbare Schneide 21 und eine beheizbare Platte 23, an deren vorderen Rand die Schneide 21 abstandsfrei angeordnet ist, in ihrer zurückgezogenen Grundposition befinden. Zum Durchtrennen der Schläuche 3 werden Platte 23 und Schneide 21, die in den mit Doppelpfeil 25 angegebenen Richtungen hin- und hergehend beweglich sind, aus der Grundposition von Fig. 3 in die Arbeitsposition, siehe Fig. 4, bewegt:

Die beheizbare Platte 23, deren Oberfläche aus rostfreiem Stahl besteht, weist eine in ihr eingebettete, nicht dargestellte Heizeinrichtung auf, deren Tätigkeit mittels Temperatursensoren 27 steuerbar ist. Zusammen mit der Schneide 21 wird die Platte 23 auf eine keimabtötende Temperatur erhitzt, die bevorzugt im Bereich von 200°C liegt, so daß die Platte 23 eine sterile Barriere darstellt, die sich in der vorgeschobenen Arbeitsposition oberhalb der beim Trennvorgang gebildeten Öffnungen 15 der Schläuche 3 befindet. In dem in Fig. 4 gezeigten, nächsten Schritt wird die Form 6 in Richtung des Doppelpfeiles 29 nunmehr aus der Extrusionsposition (Fig. 3) in die in Fig. 4 gezeigte Füllposition verschoben, wobei sich die zu diesem Zeitpunkt offenen Füllöffnungen 15 an der Oberseite der Form 6 unterhalb der in der vorgeschobenen Arbeitsstellung verbliebenen Platte 23 befinden und somit durch diese sterile Barriere abgedeckt sind. Fig. 4 zeigt den Betriebszustand, in dem die Form 6 die Füllposition erreicht hat, wo sich die Füllöffnungen 15 nunmehr unterhalb eines Abfüllsterilraumes 31 befinden. Wie aus Fig. 4 zu ersehen ist, erstreckt sich die Platte 23 längs der in die Füllposition führenden Bewegungsbahn der Form 6 so weit, daß der gesamte Bereich dieser Bewegungsbahn abgedeckt ist, d.h. daß die Füllöffnungen 15 erst den Abdeckungsbereich der Platte 23 verlassen, wenn sie in den Bereich des Abfüllsterilraumes 31 gelangen.

Erst nach Erreichen dieser Füllposition werden Platte 23 und Schneide 21 wieder aus der vorgeschobenen Arbeitsposition in die Grundposition zurückgefahren, in der sich die Schneide 21 wiederum in der Ausgangsstellung für das Durchtrennen der beim nächsten Extrusionstakt gebildeten Schläuche 3 befindet, siehe Fig. 5.

Die wesentliche Besonderheit der Erfindung, daß die beim Trennvorgang der extrudierten Schläuche gebildeten Füllöffnungen vom Augenblick ihrer Bildung bis zum Erreichen der durch den Abfüllsterilraum 31 geschützten Füllposition durch eine sterile Barriere abgedeckt sind, ist vorstehend am Beispiel einer beheizbaren Platte 23 mit an ihrer Vorderseite befindlicher, beheizbarer Schneide 21 erläutert. Es ist zu bemerken, daß prinzipiell auch die Verwendung eines andersartigen Trennelementes und eines anders aufgebauten, beheizbaren, eine sterile Barriere bildenden Bauelementes möglich ist. So könnte beispielsweise anstelle einer messerartigen Schneide 21 ein Heizdraht vorgesehen sein oder anstelle der Platte 23 ein beheizbares, äußerst engmaschiges Gitter mit Öffnungen im Mikrometerbereich. Das Verfahren kann, wie es in Fig. 3 bis 5 dargestellt ist, für die gleichzeitige Herstellung mehrerer Behälter, vorzugsweise kleinvolumiger Behälter in Ampullenform, verwendet werden oder für die Herstellung von Behältern, die aus je einem bei jedem Arbeitstakt extrudierten Schlauch einzeln hergestellt werden. Die Ausbildung der Behälter kann durch Blasformen oder, namentlich bei sehr kleinvolumigen Behältern, durch Vakuumformen durchgeführt werden.

## Patentansprüche

1. Verfahren zum Herstellen und Befüllen von Behältern (12), bei dem zumindest ein Schlauch (3) plastifizierten Kunststoffmaterials in eine geöffnete Form (6) hinein extrudiert wird, der Schlauch (3) an seinem vorauseilenden Ende beim Schließen der Form (6) zur Bildung des Behälterbodens verschweißt wird, der Schlauch (3) oberhalb der Form (6) zur Bildung einer Füllöffnung (15) mittels eines Trennelementes (21) durchtrennt wird und die Form (6) mit dem die offene Füllöffnung (15) aufweisenden Schlauch (3) in eine Füllposition bewegt wird, in welcher der Behälter (12); nachdem dieser durch Erzeugen eines am Schlauch (3) wirksamen und diesen aufweitenden Druckgradienten in der Form (6) ausgebildet worden ist, befüllt wird, wobei die Füllöffnung (15) des Schlauches (3) während der Bewegung der Form (6) in die Füllposition durch eine Sterile Barriere (23) abgedeckt wird, **dadurch gekennzeichnet, daß** die sterile Barriere durch eine zusammen mit dem den Schlauch (3) durchtrennenden Trennelement (21) bewegliche, beheizbare Platte (23) gebildet ist, die auf eine keimabtötende Temperatur, erhitzt wird.

2. Verfahren nach Anspruch 1, **dadurch gekennzeichnet, daß** die beheizbare Platte (23) auf eine keimabtötende Temperatur von mehr als 150°C erhitzt wird.

3. Verfahren nach Anspruch 2, **dadurch gekennzeichnet, daß** das Trennelement aus einer Schneide (21) gebildet ist, die sich abstandsfrei an die beheizbare Platte (23) anschließt.

4. Verfahren nach Anspruch 3, **dadurch gekennzeichnet, daß** die beheizbare Platte (23) mit der an ihrem voreilenden Rand angeordneten Schneide (21) zum Durchtrennen des Schlauches (3) aus einer zurückgezogenen Grundposition in eine Arbeitsposition in einer Richtung bewegt wird, bei der die Platte (23) oberhalb der in die Füllposition führenden Bewegungsbahn der Form (6) so angeordnet wird, daß die Füllöffnung (15) auf ihrem gesamten Weg zur Füllposition durch die Platte (23) abgedeckt wird, und daß Platte (23) und Schneide (21) dann aus der Arbeitsposition wieder in die Grundposition zurückbewegt werden, nachdem die Form (6) die Füllposition erreicht hat.

5. Verfahren nach einem der Ansprüche 2 bis 4, **dadurch gekennzeichnet, daß** die Platte (23) auf eine Temperatur von mehr als 170°C, vorzugsweise auf eine im Bereich von 200°C liegende Temperatur, erhitzt wird.

6. Verfahren nach einem der Ansprüche 1 bis 5, **dadurch gekennzeichnet, daß** mehr als ein Schlauch (3) plastifizierten Kunststoffmaterials in eine mehrteilige Form (6) hinein zur gleichzeitigen Herstellung mehrerer Behälter (12) extrudiert werden und daß die Schläuche (3) durch das Trennelement (21) gemeinsam durchtrennt werden.

7. Verfahren nach einem der Ansprüche 1 bis 6, **dadurch gekennzeichnet, daß** als Form eine Blasform (6) verwendet wird, bei der der am Schlauch (3) wirksame und diesen zum Behälter (12) aufweitende Druckgradient durch Zufuhr von Blasluft erzeugt wird.

8. Verfahren nach einem der Ansprüche 1 bis 6, **dadurch gekennzeichnet, daß** eine Form verwendet wird, bei der der am Schlauch (3) wirksame und diesen zum Behälter (12) aufweitende Druckgradient durch zwischen den Formwänden und der Außenseite des Schlauches (3) erzeugten Unterdruck bewirkt wird.

9. Vorrichtung zum Herstellen und Befüllen von Behältern (12), mit zumindest einer bewegliche Formwände (5) aufweisenden Form (6), in die hinein zumindest ein Schlauch (3) plastifizierten Kunststoffmaterials extrudierbar ist, deren Formteile (5) geschlossen werden können, um durch an ihnen befindliche Schweißkanten (7) das vorauseilende Ende des Schlauches (3) zur Bildung eines Behälterbodens zu verschweißen, mit einer Einrichtung zum Erzeugen eines am Schlauch (3) wirksamen und diesen aufweitenden Druckgradienten zur Ausformung des Behälters (12) an den Formwänden (5), mit einem beweglichen Trennelement (21), das zur Bildung einer Füllöffnung (45) durch Durchtrennen des Schlauches (3) oberhalb der Form (6) zwischen einer zurückgezogenen Grundposition (Fig. 3) und einer Arbeitsposition (Fig. 4) bewegbar ist, und mit einer Verschiebeeinrichtung zum Bewegen der Form (6) in eine Füllposition zur Befüllung des Behälters (12) durch die Füllöffnung (15) hindurch, wobei eine sterile Barriere (23) in solcher Lageanordnung und mit solchen Abmessungen vorgesehen ist, daß sie sich bei der Arbeitsposition des Trennelementes (21) oberhalb der in die Füllposition führenden Bewegungsbahn der Form (6) befindet und die Füllöffnung (15) überdeckt, **dadurch gekennzeichnet, daß** als sterile Barriere eine zusammen mit einer als Trennelement dienenden Schneide (21) bewegliche, auf keimabtötende Temperatur beheizte Platte (23) vorgesehen ist.

10. Vorrichtung nach Anspruch 9, **dadurch gekennzeichnet, daß** die Schneide (21) beheizbar und abstandsfrei längs des voreilenden Randes der Platte (23) angeordnet ist und daß diese aus ihrer zurückgezogenen Grundposition beim Durchtrennen des Schlauches (3) in ihre die Bewegungsbahn der Form (6) überdeckende Arbeitsposition mit quer zur Bewegungsbahn verlaufender Richtung beweglich ist.

11. Vorrichtung nach Anspruch 9 oder 10, **dadurch gekennzeichnet, daß** die beheizbare Platte (23) eine in sie eingebettete Heizeinrichtung und zumindest einen Temperatur-Meßfühler (27) zur Steuerung der Heizeinrichtung aufweist.

12. Vorrichtung nach Anspruch 11, **dadurch gekennzeichnet, daß** die beheizbare Platte (23) mehrlagig ausgebildet ist und daß zumindest die an ihren Breitseiten außen liegenden Lagen aus rostfreiem Stahl gebildet sind.

## Claims

1. Method for producing and filling containers (12), for which at least one hose (3) of a plastified synthetic material is extruded into an open mould (6), the hose (3) being welded at its frontmost end during the closing of the mould (6) to form the container floor, the hose (3) above the mould (6) is separated by means of a separating element (21) to form a filling port (15), and the mould (6) is moved to a filling position with the hose (3) incorporating the open filling port (15), in which the container (12) is filled following the forming of the same by means of creating an expanding pressure gradient in the mould (6) that acts on the hose (3), whereby the filling port (15) of the hose (3) is covered by means of a sterile barrier (23) during movement of the mould (6) into the filling position, **characterised in that** the sterile barrier is heated to a bacteria destroying temperature by means of heatable plate (23) that is moveable together with the separating element (21) that separates the hose (3).

2. Method according to Claim 1, **characterised in that** the heatable plate (23) is heated to a bacteria destroying temperature of more than 150°C.

3. Method according to Claim 2, **characterised in that** the separating element consists of a blade (21) that closely follows the heatable plate (23).

4. Method according to Claim 3, **characterised in that** the heatable plate (23) is moved from a retracted starting position into a working position with the blade (21) for separating the hose (3) positioned at it's frontmost end, i.e. in a direction in which the plate (23) is positioned above the movement path of the mould (6) leading to the filling position in such a way that the filling port (15) is covered by the plate (23) along its entire path towards the filling position, and **in that** the plate (23) and the blade (21) are then moved from the working position back into the starting position after the mould (6) has reached the filling position.

5. Method according to one of the Claims 2 to 4, **characterised in that** the plate (23) is heated to a temperature of more than 170°C, preferably to a temperature of approximately 200°C.

6. Method according to one of the Claims 1 to 5, **characterised in that** more than one hose (3) of a plastified synthetic material is extruded into a multi-component mould (6) for the simultaneous production of several containers (12), and **in that** the hoses (3) are separated at the same time by the separating element (21).

7. Method according to one of the Claims 1 to 6, **characterised in that** a blow mould (6) is used as the mould for which the pressure gradient acting on the hose (3) and expanding the same to form the container (12) is created by means of a supply of blown air.

8. Method according to one of the Claims 1 to 6, **characterised in that** a mould is used where the pressure gradient acting on the hose (3) and expanding the same to form the container (12) is applied by means of underpressure created between the mould walls and the outside of the hose (3).

9. Device for producing and filling containers (12) with at least one mould (6) incorporating moveable mould walls (5), into which at least one hose (3) of a plastified synthetic material can be extruded, the mould parts (5) of which can be closed in order to weld the frontmost end of the hose (3) by means of welding edges (7) positioned on the same to create a container floor, with a means for producing a pressure gradient acting on the hose (3) and expanding the same to form the container (12) along the mould walls (5), with a moveable separating element (21), which is moveable between a retracted starting position (Fig. 3) and a working position (Fig. 4) to form a filling port (45) by means of separating the hose (3) above the mould (6), and with a displacement means for moving the mould (6) into a filling position for filling of the container (12) through the filling port (15), whereby a sterile barrier (23) is envisaged in such a positioning arrangement and with such dimensions that the same will be located above the movement path of the mould (6) leading to the filling position in the working position of the separating element (21) to cover the filling port (15), **characterised in that** a moveable plate (23) that can be heated to a bacteria destroying temperature together with a blade (21) serving as the separating element is envisaged as the sterile barrier.

10. Device according to Claim 9, **characterised in that** the blade (21) can be heated and is positioned closely along the frontmost edge of the plate (23), and **in that** the same can be moved from its retracted starting position during separating of the hose (3) into its working position that covers the movement path of the mould (6) in a direction that is transverse to the movement path.

11. Device according to Claim 9 or 10, **characterised in that** the heatable plate (23) incorporates a heater embedded into the same and at least one temperature gauge (27) to control the heater.

12. Device according to Claim 11, **characterised in that** the heatable plate (23) consists of several layers, and **in that** at least the external layers positioned on the wide sides are made of stainless steel.

## Revendications

1. Procédé de fabrication et de remplissage de récipients (12), dans lequel au moins un tuyau (3) en matière plastique plastifiée est extrudé à l'intérieur d'un moule ouvert (6), le tuyau (3) est soudé au niveau de son extrémité avant à l'occasion de la fermeture du moule (6) pour former le fond du récipient, le tuyau (3) est sectionné au moyen d'un élément de sectionnement (21) au-dessus du moule (6) pour former un orifice de remplissage (15) et le moule (6) avec le tuyau (3) comprenant l'orifice de remplissage ouvert (15) est déplacé dans une position de remplissage, dans laquelle est rempli le récipient (12), après que celui-ci ait été conçu dans le moule (6) en générant un gradient de pression agissant sur le tuyau (3) et élargissant celui-ci, l'orifice de remplissage (15) du tuyau (3), pendant le déplacement du moule (6) dans la position de remplissage, étant recouvert par une barrière stérile (23), **caractérisé en ce que** la barrière stérile est formée par une plaque chauffante (23), mobile conjointement avec l'élément de sectionnement (21) sectionnant le tuyau (3), laquelle plaque est chauffée à une température détruisant les germes.

2. Procédé selon la revendication 1, **caractérisé en ce que** la plaque chauffante (23) est chauffée à une température détruisant les germes de plus de 150°C.

3. Procédé selon la revendication 2, **caractérisé en ce que** l'élément de sectionnement est formé par une lame (21) raccordée sans espacement à la plaque chauffante (23).

4. Procédé selon la revendication 3, **caractérisé en ce que** la plaque chauffante (23) est déplacée avec la lame (21) disposée sur son bord avant, destinée à sectionner le tuyau (3), d'une position de base en retrait dans une position de travail dans une direction dans laquelle la plaque (23) est disposée au-dessus de la trajectoire du moule (6) menant à la position de remplissage, de sorte que l'orifice de remplissage (15), sur l'ensemble de son trajet menant à la position de remplissage, est recouvert par la plaque (23) et **en ce que** la plaque (23) et la lame (21) sont ensuite redéplacées de la position de travail à nouveau dans la position de base, après que le moule (6) ait atteint la position de remplissage.

5. Procédé selon l'une quelconque des revendications 2 à 4, **caractérisé en ce que** la plaque (23) est chauffée à une température de plus de 170°C, de préférence à une température située dans la plage de 200°C.

6. Procédé selon l'une quelconque des revendications 1 à 5, **caractérisé en ce que** plus d'un tuyau (3) en matière plastique plastifiée sont extrudés à l'intérieur d'un moule (6) en plusieurs parties pour fabriquer simultanément plusieurs récipients (12) et **en ce que** les tuyaux (3) sont sectionnés conjointement par l'élément de sectionnement (21).

7. Procédé selon l'une quelconque des revendications 1 à 6, **caractérisé en ce qu'**on utilise comme moule un moule de soufflage (6), dans lequel le gradient de pression agissant sur le tuyau (3) et élargissant celui-ci pour former le récipient (12) est généré par une amenée d'air de soufflage.

8. Procédé selon l'une quelconque des revendications 1 à 6, **caractérisé en ce qu'**on utilise un moule dans lequel le gradient de pression agissant sur le tuyau (3) et élargissant celui-ci pour former le récipient (12) est provoqué par une dépression générée entre les parois du moule et le côté extérieur du tuyau (3).

9. Dispositif de fabrication et de remplissage de récipients (12), avec au moins un moule (6) comprenant des parois de moule (5) mobiles, moule à l'intérieur duquel peut être extrudé au moins un tuyau (3) en matière plastique plastifiée, dont les parties de moule (5) peuvent être fermées, afin de souder aux arêtes de soudure (7) situées sur lesdites parties l'extrémité avant du tuyau (3) pour former un fond de récipient, avec un système destiné à générer un gradient de pression agissant sur le tuyau (3) et élargissant celui-ci pour former le récipient (12) sur les parois du moule (5), avec un élément de sectionnement mobile (21), qui, pour former un orifice de remplissage (45) en sectionnant le tuyau (3), peut être déplacé au-dessus du moule (6) entre une position de base en retrait (figure 3) et une position de travail (figure 4), et avec un dispositif de transport destiné à déplacer le moule (6) dans une position de remplissage destinée à remplir le récipient (12) à travers l'orifice de remplissage (15), une barrière stérile (23) étant prévue dans une telle disposition et avec des dimensions telles qu'elle se situe dans la position de travail de l'élément de sectionnement (21), au-dessus de la trajectoire du moule (6) menant à la position de remplissage et recouvre l'orifice de remplissage (15), **caractérisé en ce qu'**une plaque (23), chauffée à une température détruisant les germes, mobile conjointement avec une lame (21) servant d'élément de sectionnement, est prévue comme barrière stérile.

10. Dispositif selon la revendication 9, **caractérisé en ce que** la lame (21) peut être chauffée et est disposée sans espacement le long du bord avant de la plaque (23) et **en ce que** ladite lame est mobile depuis sa position de base en retrait, à l'occasion du sectionnement du tuyau (3), dans sa position de travail recouvrant la trajectoire du moule (6), avec une direction s'étendant transversalement à la trajectoire.

11. Dispositif selon la revendication 9 ou 10, **caractérisé en ce que** la plaque chauffante (23) comprend un dispositif de chauffage incorporé dans celle-ci et au moins un capteur de température (27) destiné à commander le dispositif de chauffage.

12. Dispositif selon la revendication 11, **caractérisé en ce que** la plaque chauffante (23) est conçue en plusieurs couches et **en ce qu'**au moins les couches situées à l'extérieur sur leurs côtés larges sont conçues en acier inoxydable.
